# EUROPÄISCHE PATENTSCHRIFT

(11) **EP 1 291 939 B1**
(45) Veröffentlichungstag und Bekanntmachung des Hinweises auf die Patenterteilung: **04.03.2009**
(21) Anmeldenummer: 02013778.2
(22) Anmeldetag: 21.06.2002
(51) Int. Cl.: H01M 2/26, H01M 4/70, H01M 10/04

(54) **Galvanisches Element mit Wickelelektrodensatz**
Galvanic element comprising spirally wound electrode assembly
Elément galvanique comportant assemblage d'électrodes enroulées

(30) Priorität: 08.09.2001 DE 10144281
(43) Veröffentlichungstag der Anmeldung: 12.03.2003
(73) Patentinhaber: Johnson Controls Hybrid and Recycling GmbH, 30419 Hannover (DE)
(72) Erfinder: Wiepen, Rolf, 58239 Schwerte (DE)
(74) Vertreter: Lins, Edgar

(56) Entgegenhaltungen:
- EP-A- 1 076 371
- US-A- 4 322 484
- US-A- 4 529 675
- US-B1- 6 214 490

## Beschreibung

Die Erfindung betrifft ein galvanisches Element mit Wickelelektrodensatz, bestehend aus einer bandförmigen positiven Elektrode, einer bandförmigen negativen Elektrode und einem zwischenliegenden bandförmigen Separator, die spiralförmig aufgerollt sind, bei dem der Rand mindestens einer Wickelelektrode mit zumindest einem Stromkollektor, der zur elektrischen und mechanischen Verbindung der Elektrode mit einem Pol dient, mechanisch und elektrisch leitend verbunden ist. Der Stromkollektor ist mit mehr als einer Kontaktfahne versehen. Die Erfindung ist insbesondere bei Lithium-, Nickel-Metallhydrid-, Nickel-Kadmium- und anderen galvanischen Elementen in Rundzellenform mit Wickelelektrodensatz anwendbar.

Aus dem Dokument DE 25 16 530 C3 ist ein Stromkollektor in Form einer dünnen Metallplatte mit einer Kontaktfahne bekannt, der eine Oberfläche mit konvexen Erhebungen in Form von Spitzen, Stanzungen oder einem Drahtgeflecht aufweist.

Ein anderer Stromkollektor mit radial verlaufenden Durchbrüchen gemäß der Druckschrift DE 30 19 186 C2 hat eine an ihren Längsseiten abgeschrägte und abgewinkelte Kontaktfahne, die gegen den Stromkollektor zurückgebogen wird und sich, nachdem sie mit der stromableitenden Innenseite des Zellendeckels fest verbunden und der Deckel verschlossen wurde, mit den angeformten Stegen federnd gegen die Kollektorplatte abstützt.

Im Dokument US 45 54 227 wird durch verschiedene Blechformteile mit einer Kontaktfahne durch Ausformung möglichst vieler linienförmiger Kontakte versucht, den Übergangswiderstand zu senken.

Die Gestaltung des Stromkollektors für Wickelelektroden mit einer Kontaktfahne, wie er sich aus dem zitierten Stand der Technik ergibt, stellt einen Engpass für die Stromleitung dar, der durch Materialwahl und Dimensionierung nur beschränkt behoben werden kann.

Bei der im Dokument EP 0 822 605 B1 gefundenen Lösung werden mehrere Kontaktfahnen, die über die Länge des Bandes verteilt sind, an die von aktiver Masse freigehaltenen Ränder angeschweißt.

Die Konstruktion, die im Dokument EP 0 298 800 B1 beschrieben ist, besitzt Kontaktfahnen, die quer über die ganze Breite des Bandes befestigt sind und mit aufgewickelt werden.

Im Dokument EP 0 357 399 B1 ist die Kante der bandförmigen Elektrode in einzelne Lappen geschlitzt, die nach dem Wickeln zusammengefaltet und mit einem Metallzapfen verbunden werden.

Solche am oder auf dem Elektrodenband befestigten oder durch das Elektrodenband gebildeten Kontaktfahnen stören bereits beim Wickeln der Elektrode und vermindern die Produktionskapazität der Wickelmaschinen.

Die Ausführungsform gemäß dem Dokument EP 0 413 867 B1 kombiniert mehrere Stromkollektoren mit je einer Kontaktfahne in segmentierter oder verschachtelter Weise, die um eine Öffnung in der Mitte der Kollektorenanordnung gruppiert sind. Diese Konstruktion hat den Nachteil, das sie schwer und aufwändig zu montieren ist. In der dargestellten Ausführung lassen sich nicht mehr als zwei Kontaktfahnen oder Kontaktfahnenstapel realisieren.

US 6,214,490 offenbart eine Batteriezelle mit Wickelelektrode, die in einem becherförmigen Gehäuse untergebracht ist. Die im unteren Bereich hervorstehenden Elektroden werden mit einem leitenden Schaum mit der Innenseite des becherförmigen Gehäuses verbunden.

EP 1 076 371 A1 offenbart eine Sekundärzelle mit Wickelelektroden, die am oben und unteren Rand jeweils mit einer Stromkollektorplatte leitend verbunden sind. Vor der Stromkollektorplatte geht eine gebogene Lasche ab, die mit jeweils einem Pol der Sekundärbatterie verbunden ist.

US 4,322,484 A offenbart ein galvanisches Element mit Wickelelektrodensatz, der aus einer bandförmigen positiven Elektrode, einer bandförmigen negativen Elektrode und einem zwischen liegenden bandförmigen Separator besteht, die spiralförmig aufgerollt sind. Der Rand mindestens einer Wickelelektrode ist mechanisch und elektrisch leitend mit zumindest einem Stromkollektor verbunden, der zur elektrischen und mechanischen Verbindung der Elektrode mit einem Pol dient. Der Stromkollektor ist mehrteilig aus rechteckförmigen Platten aufgebaut.

JP(S)58-70671 U1 offenbart ein galvanisches Element mit Wickelelektrodensatz, das einen Kollektor mit einem Paar an gegentiberliegenden Außenkanten herausragenden Lappen hat, die zwischen dem Elektrodenkörper und der Innenfläche des Batteriegehäuses geklemmt sind und das Kathodenblech mit dem Batteriegehäuse elektrisch verbinden.

JP 11297301 offenbart ein galvanisches Element mit Wickelelektrodensatz, bestehend aus einer bandförmigen positiven Elektrode, einer bandförmigen negativen Elektrode und einem zwischenliegenden bandförmigen Separator, die spiralförmig aufgerollt sind. Der Rand mindestens einer Wickelelektrode ist mit einem zur elektrischen und mechanischen Verbindung der Elektrode mit einem Pol dienendem Stromkollektor mechanisch und elektrisch leitend verbunden. Der Stromkollektor ist scheibenförmig und hat mehrere am Umfang der Kollektorscheibe radial verteilt angeordnete Kontaktfahnen. Der Erfindung liegt die Aufgabe zugrunde, ein galvanisches Element mit Wickelelektrodensatz anzugeben, bei dem leicht zu montierende, kostengünstige und trotzdem mit hohen Strömen belastbare Verbindungselemente eine sichere Kontaktierung der Wickelelektroden mit den Polen des galvanischen Elements gewährleisten.

Diese Aufgabe wird erfindungsgemäß bei einem galvanischen Element der eingangs genannten Art durch die kennzeichnenden Merkmale des Anspruchs 1 gelöst In den Unteransprüchen sind vorteilhafte Ausgestaltungen der Erfindung angegeben.

Das erfindungsgemäße galvanische Element setzt dem elektrischen Strom durch die neuen Stramkollektoren mit mehr als einer Kontaktfahne den geringstmöglichen Widerstand entgegen. Diese Stromkollektoren sind wesentlich einfacher zu montieren als bekannte Kollektorkonstruktionen in galvanischen Elementen für Hochstromanwendungen. Durch die raumsparende flache Bauweise der Stromkollektoren ergibt sich ein hoher Nutzungsgrad der Kapazität des galvanischen Elements. Bevorzugt anwendbar ist die Erfindung bei Lithium-, Nickel-Metallhydrid-, Nickel-Kadmium- und anderen galvanischen Elementen in Rundzellenform mit gewickelten Elektroden.

Der besondere Vorteil der Erfindung besteht darin, dass mit dem gleichen Bauteil ein hochleistungsfähiges Stromkollektorsystem mit einem niedrigen elektrischen Widerstand an der positiven und der negativen Elektrode eines Elektrodenwickels realisiert wird. Dazu sind ein oder mehrere Stromkollektoren mit dem positiven und dem negativen Rand an den Stirnseiten der Wickelelektroden leitend verbunden.

Die Kontaktfahnen des Stromkollektors der einen Wickelelektrode sind am Rand des Stromkollektors nach innen gebogen, so dass die Kontaktfahnen nach erfolgter Montage des galvanischen Elements den Gehäusebecher nicht berühren. Das Ende jeder Kontaktfahne ist vorzugsweise Z-förmig nach außen gebogen und, beispielsweise durch Schweißen oder Pressen, mechanisch und elektrisch leitend mit dem elektrisch leitenden Deckel verbunden.

Die Kontaktfahnen des Stromkollektors der anderen Elektrode, die in den Gehäusebecher eingeführt werden soll, werden so umgebogen, dass sie an der Mantelfläche des Elektrodenwickels anliegen. Nach dem Einführen liegen die Kontaktfahnen großflächig an der Innenmantelfläche des Gehäusebechers an und gewährleisten so eine optimale Stromübertragung von der Wickelelektrode zum Gehäusebecher.

Um eine optimale Verbindung zwischen dem Stromkollektor und den Rändern des Wickelelektrodensatzes zu erreichen, ist es vorteilhaft, wenn die Stromkollektoren strukturgeprägt sind und dadurch an ihrer Oberfläche Noppen, Spitzen oder Grate aufweisen.

Eine Verbesserung der Verbindung zwischen dem Stromkollektor und den Rändern der Wickelelektroden kann auch dadurch erreicht werden, dass dem Stromkollektor radial verlaufende Sicken eingeprägt werden. Eine weitere Möglichkeit der Verbesserung dieses Kontakts ist es, den Stromkollektor mit Durchbrüchen zu versehen.

Aufbau und Funktionsweise eines erfindungsgemäßen galvanischen Elements werden im Folgenden anhand der Figuren erläutert.

Die Figuren 1a - f zeigen die Vormontage eines deckelseitigen Stromkollektors.

Die Figuren 2a - d zeigen die Vormontage des gehäusebecherseitigen Stromkollektors mit einer Kollektorscheibe.

Die Figuren 3a - d zeigen die Vormontage des gehäusebecherseitigen Stromkollektors mit zwei gegeneinander verdrehten Kollektorscheibe.

Die Figur 4 zeigt das Einschieben des mit den erfindungsgemäßen Stromkollektoren ausgestatteten und dem Zellendeckel verbundenen Elektrodenwickels in den Gehäusebecher.

Figur 5 zeigt eine Zusammenbauskizze eines fertigen, mit erfindungsgemäßen Stromkollektoren ausgestatteten galvanischen Elements.

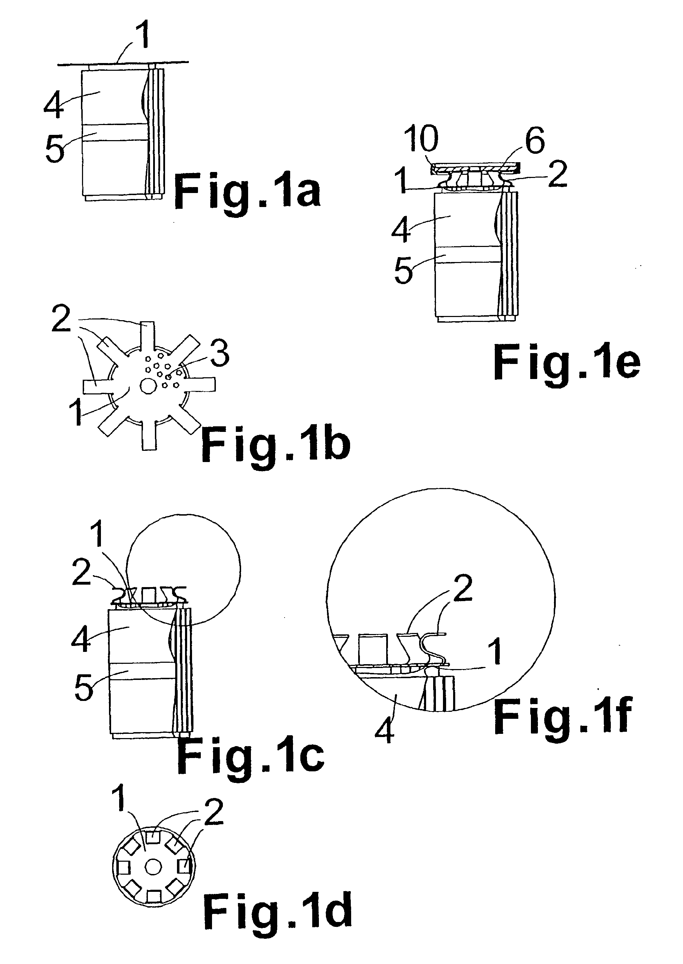

Entsprechend Figur 1a ist eine Kollektorscheibe 1, beispielsweise durch Schweißen oder Pressen, mechanisch und elektrisch leitend mit dem Rand einer Elektrode des mit einer Bandage 5 zusammengehaltenen Wickelelektrodensatzes 4 verbunden. Figur 1b zeigt eine Draufsicht der in Figur 1a dargestellten Anordnung, bei der die beispielhaft dargestellten Strukturprägungen 3 des Stromkollektors zu erkennen sind. In Figur 1c und der Draufsicht Figur 1d sind die Kontaktfahnen 2, in der in Figur 1f detailliert dargestellten Weise, Z-förmig nach innen ein- und dann nach außen gebogen. In Figur 1e sind die Enden der Kontaktfahnen mechanisch und elektrisch leitend, vorzugsweise durch Schweißen oder Pressen, mit dem Zellendeckel 6 verbunden, der an der umlaufenden Kante mit einer elektrisch isolierenden Dichtung 10 versehen ist.

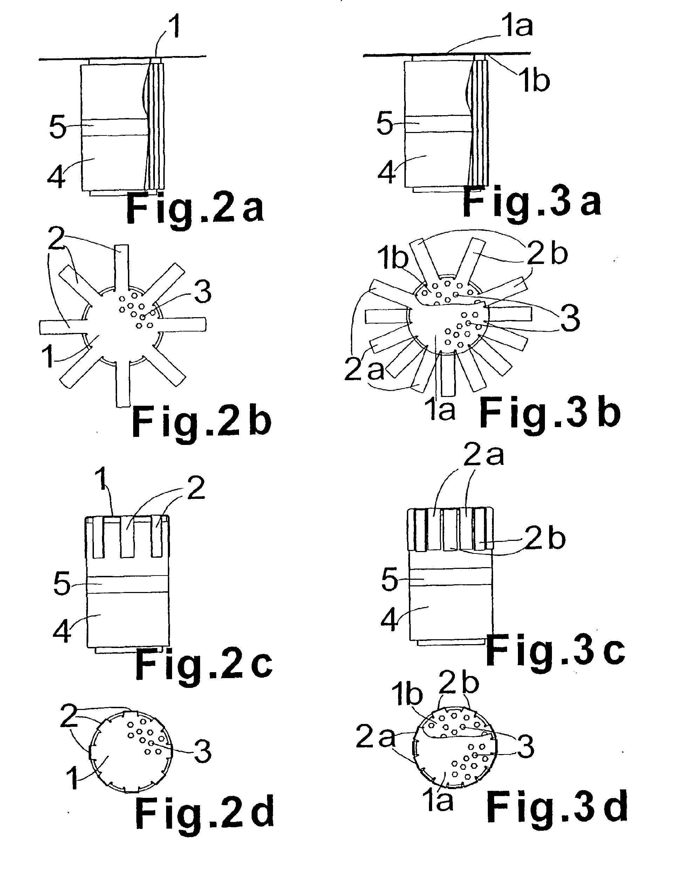

Gemäß Figur 2a ist eine Kollektorscheibe 1 mit dem Rand der anderen Elektrode des Elektrodenwickels 4 elektrisch leitend und mechanisch verbunden. Figur 2b zeigt eine Draufsicht auf die in Figur 2a dargestellte Anordnung, bei der die beispielhaft vorhandenen Strukturprägungen 3 des Stromkollektors zu erkennen sind. In Figur 2c und der Draufsicht Figur 2d sind die Kontaktfahnen 2 in Richtung der Mantelfläche des Wickelelektrodensatzes 4 umgebogen.

Gemäß Figur 3a sind alternativ zwei, vorzugsweise um eine Kontaktfahnenteilung gegeneinander verdrehte, übereinandergelegte Kontaktscheiben 1a, 1b mit dem Rand der anderen Elektrode des Elektrodensatzes 4 elektrisch leitend und mechanisch verbunden, um so den elektrischen Widerstand noch weiter zu reduzieren. Figur 3b zeigt eine Draufsicht auf die in Figur 3a dargestellte Anordnung, bei der die beispielhaft vorhandenen Strukturprägungen 3 des Stromkollektors zu erkennen sind. In Figur 3c und der Draufsicht gemäß Figur 3d sind die Kontaktfahnen 2a, 2b in Richtung der Mantelfläche des Wickelelektrodensatzes umgebogen.

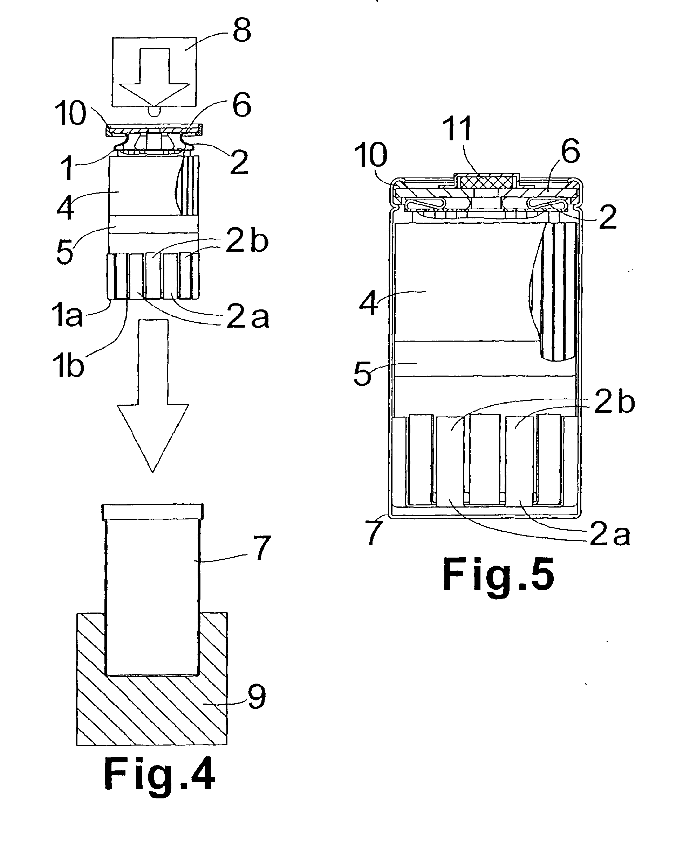

Entsprechend Figur 4 wird der mit den Stromkollektoren 1, 1 a, 1b und mit dem Deckel 6 mit Dichtung 10 vormontierte Elektrodensatz 4 mit einem Einschubwerkzeug 8 in den vom Becherhalter 9 gehaltenen Gehäusebecher 7 eingeschoben.

Figur 5 zeigt das fertig montierte galvanisch Element, bei dem der Gehäusebecher durch Umbördeln des Becherrandes verschlossen ist, das mit einem Ventilstopfen mit elektrisch leitender Kappe 11 versehen ist. Im Inneren des elektrisch leitenden becherförmigen Gehäuses 7 ist der Wickelelektrodensatzes 4 mit Bandage 5 zu erkennen. Der elektrisch leitende Deckel (6) ist gegen das Gehäuse mit einer elektrisch isolierenden Dichtung (10) abgedichtet. Ein oder mehrere Stromkollektoren 1, 1a, 1b mit mehreren daran radial verteilt angeordneten Kontaktfahnen 2, 2a, 2b bilden die Verbindungselemente, die den räumlichen Abstand zwischen den Polen des galvanischen Elements, die von dem Deckel 6 und dem Gehäuse 7 gebildet werden, und dem Rand des Wickelelektrodensatzes 4 leitend überbrücken.

## Patentansprüche

1. Galvanisches Element mit Wickelelektrodensatz, bestehend aus einer bandförmigen positiven Elektrode, einer bandförmigen negativen Elektrode und einem zwischenliegenden bandförmigen Separator, die spiralförmig aufgerollt sind, bei dem der Rand mindestens einer Wickelelektrode mit zumindest einem Stromkollektor, der zur elektrischen und mechanischen Verbindung der Elektrode mit einem Pol dient, mechanisch und elektrisch leitend verbunden ist, wobei der Stromkollektor (1) scheibenförmig ist und eine Kollektorscheibe (1) mit mehreren am Umfang der Kollektorscheibe (1) radial verteilt angeordneten Kontaktfahnen (2) hat, **dadurch gekennzeichnet, dass** an der gehäusebecherseitigen Elektrode ein oder mehrere übereinanderliegende Kollektorscheiben (1, 1a, 1b) befestigt sind und die Kontaktfahnen (2, 2a, 2b) so gebogen sind, dass sie an Innenflächen des Gehäusebechers (7) anliegen, und dass an der gehäusebecherseitigen Elektrode übereinanderliegend befestigte Kollektorscheiben (1a, 1 b) gegeneinander verdreht sind.

2. Galvanisches Element nach Anspruch 1, **dadurch gekennzeichnet, dass** die Kontaktfahnen (2) am deckelseitigen Stromkollektor (1) im spitzen Winkel Z-förmig nach innen und nach außen gebogen und mit dem Zellendeckel (6) verbunden sind.

3. Galvanisches Element nach Anspruch 1, **dadurch gekennzeichnet, dass** an der deckelseitigen Elektrode zwei oder mehrere Kollektorscheiben (1) übereinander befestigt sind und mit dem Zellendeckel (6) elektrisch leitend und mechanisch verbunden sind.

4. Galvanisches Element nach Anspruch 1, **dadurch gekennzeichnet, dass** die Kontaktfahnen (2a, 2b) der gehäusebecherseitigen Elektrode nach der Montage zwischen der äußeren Mantelfläche des Wickelelektrodensatzes (4) und der inneren Mantelfläche des Gehäusebechers (7) liegen.

5. Galvanisches Element nach Anspruch 1, **dadurch gekennzeichnet, dass** die Kollektorscheiben (1, 1a, 1b) strukturgeprägt sind und Noppen, Spitzen oder Grate (3) aufweisen.

6. Galvanisches Element nach Anspruch 1, **dadurch gekennzeichnet, dass** die Kollektorscheiben (1) radial verlaufende Sicken aufweisen.

7. Galvanisches Element nach Anspruch 1, **dadurch gekennzeichnet, dass** die Kollektorscheiben (1) mit Durchbrüchen versehen sind.

## Claims

1. Galvanic element with a set of wound electrodes, comprising a positive electrode in strip form, a negative electrode in strip form and an interposed separator in strip form, which are spirally rolled up, in which arrangement the edge of at least one wound electrode is connected mechanically and electrically conductively to at least one current collector, which serves for the electrical and mechanical connection of the electrode to a pole, wherein the current collector (1) is disk-shaped and comprises a collector disk (1) with multiple contact tabs (2) which are radially distributed among the circumference of the collector disk (1), **characterized in that** one or more collector disk (1, 1a, 1b) lying one on top of the other are fastened to the electrode on the housing cup side and the contact tabs (2, 2a, 2b) are bent in such a way that they lie against inner faces of the housing cup (7), and that collector disks (1a, 1b) fastened lying one on top of the other to the electrode on the housing cup side are turned with respect to each other.

2. Galvanic element according to Claim 1, **characterized in that** the contact tabs (2) on the current collector (1) on the cover side are bent at an acute angle inward and outward in a Z-shaped manner and are connected to the cell cover (6).

3. Galvanic element according to Claim 1, **characterized in that** two or more collector disks (1) are fastened one on top of the other to the electrode on the cover side and are connected electrically conductively and mechanically to the cell cover (6).

4. Galvanic element according to Claim 1, **characterized in that**, after assembly, the contact tabs (2a, 2b) of the electrode on the housing cup side lie between the outer lateral surface of the set of wound electrodes (4) and the inner lateral surface of the housing cup (7).

5. Galvanic element according to Claim 1, **characterized in that** the collector disks (1, 1a, 1b) are embossed and have pimples, points or burrs (3).

6. Galvanic element according to Claim 1, **characterized in that** the collector disks (1) have radially running beads.

7. Galvanic element according to Claim 1, **characterized in that** the collector disks (1) are provided with apertures.

## Revendications

1. Elément galvanique comportant une électrode positive en forme de ruban, une électrode négative en forme de ruban et entre elles un séparateur en forme de ruban, ces éléments étant enroulés en spirale,
le bord d'au moins une électrode enroulée étant relié mécaniquement et électriquement à au moins un collecteur de courant servant à la liaison électrique et mécanique de l'électrode et à un pôle,
le collecteur de courant (1) étant en forme de disque et le collecteur en forme de disque (1) comporte plusieurs pattes de contact (2) réparties radialement à la périphérie du collecteur en forme de disque (1),
**caractérisé en ce que**
l'électrode constituant un boîtier en forme de gobelet porte solidairement un ou plusieurs collecteurs en forme de disque (1, 1a, 1b) superposés,
des pattes de contact (2, 2a, 2b) sont recourbées pour s'appliquer contre la surface intérieure du boîtier en forme de gobelet (7), et
les collecteurs en forme de disque (1a, 1b) fixés de manière superposée à l'électrode des côtés du boîtier en forme de gobelet sont tournés les uns par rapport aux autres.

2. Elément galvanique selon la revendication 1,
**caractérisé en ce que**
les pattes de contact (2) du collecteur de courant (1), côté couvercle, sont recourbées vers l'intérieur et vers l'extérieur suivant un angle aigu en forme de Z, et elles sont reliées au couvercle de la cellule (6).

3. Elément galvanique selon, la revendication 1,
**caractérisé en ce que**
deux ou plusieurs collecteurs en forme de disque (1) sont fixés de manière superposée à l'électrode du côté du couvercle et sont reliés au couvercle de la cellule (6) par une liaison électrique et mécanique.

4. Elément galvanique selon la revendication 1,
**caractérisé en ce que**
les pattes de contact (2a, 2b) des électrodes du côté du boîtier en forme de gobelet, après montage, se placent entre la surface enveloppe extérieure du jeu d'électrodes d'enroulement (4) et la surface enveloppe intérieure du boîtier en forme de gobelet (7).

5. Elément galvanique selon la revendication 1,
**caractérisé en ce que**
les collecteurs en forme de disque (1, 1a, 1b) ont une structure imprimée et comportent des bossages, des pointes ou des barbes (3).

6. Elément galvanique selon la revendication 1,
**caractérisé en ce que**
les collecteurs en forme de disque (1) ont des nervures radiales.

7. Elément galvanique selon la revendication 1,
**caractérisé en ce que**
les collecteurs en forme de disque (1) ont des passages.
